# EUROPEAN PATENT APPLICATION

(11) **EP 4 134 983 A1**
(43) Date of publication of application: **15.02.2023**
(21) Application number: 21785693.9
(22) Date of filing: 09.04.2021
(51) Int. Cl.: G21F 5/08

(54) **NUCLEAR FUEL TRANSPORT CONTAINER**

(30) Priority: 09.04.2020 CN 202010275948
(71) Applicant: Shanghai Nuclear Engineering Research & Design Institute Co., Ltd., Shanghai 200233 (CN)
(72) Inventor: SHEN, Guangyao, Shanghai 200233 (CN); ZHANG, Zhenyu, Shanghai 200233 (CN); LI, Chuanyi, Shanghai 200233 (CN); SHEN, Yongjian, Shanghai 200233 (CN); HE, Xiaoming, Shanghai 200233 (CN); SHAO, Changlei, Shanghai 200233 (CN); ZHANG, Xiaochun, Shanghai 200233 (CN); AI, Weijiang, Shanghai 200233 (CN); DANG, Halei, Shanghai 200233 (CN); LIU, Xiaoqiang, Shanghai 200233 (CN); SHI, You, Shanghai 200233 (CN); WANG, Guodong, Shanghai 200233 (CN); ZHOU, Yan, Shanghai 200233 (CN)
(74) Representative: Patentanwälte Ruff, Wilhelm, Beier, Dauster & Partner mbB
(86) International application number: PCT/CN2021/086260
(87) International publication number: WO 2021/204265

(57) **Abstract**

A nuclear fuel transport container (100), comprising an inner housing (1), a first accommodating space (11) for accommodating a nuclear fuel assembly being provided in said housing; an outer housing (2), a second accommodating space (21) for accommodating at least one inner housing (1) being provided within said outer housing; an inner/outer housing linking apparatus (3), which connects the inner housing (1) to the outer housing (2); wherein a neutron absorption plate (12) is provided at a side of the inner housing (1) facing the nuclear fuel assembly, the outer housing (2) is a two layer housing body structure made up of an outer layer housing body (22) facing an outside atmosphere side and an inner layer housing body (23) facing an inner housing (1) side, an enclosed space is formed by the outer layer housing body (22) and the inner layer housing body (23), a buffering thermal insulation material (24) is filled into the enclosed space, and a neutron moderation plate (4) is provided between the inner layer housing body (23) and the inner housing (1). The present transport container (100) ensures the safety of a nuclear fuel assembly when subject to shaking impact, allowing the nuclear fuel assembly to remain in a sub-critical state; also, a single outer housing (2) may accommodate a plurality of inner housings (1), and transportation of a plurality of nuclear fuel assemblies can be accomplished with only a single round of assembly and disassembly of the outer housing (2), improving transportation efficiency.

## Description

### TECHNICAL FIELD

The present invention relates to the field of nuclear fuel transport container.

### BACKGROUND

With the development of nuclear technology, more and more nuclear power plants are being built and expanded, and the core technical components (nuclear fuel assemblies) of nuclear power plants need to be transported from nuclear fuel manufacturing plants to nuclear power plants. Due to the radioactive characteristics of nuclear fuel, it is necessary to ensure criticality safety and shielding safety of nuclear fuel assemblies in case of falling, puncturing, water flooding, etc. during transportation. Therefore, it is necessary to design special transport containers for nuclear fuel assemblies to ensure the safety of nuclear fuel during transportation.

The housing of the nuclear fuel transport container in the prior art is generally formed by hinge connection. However, the hinge used for this special large transport container is difficult to process and assemble, and the scrap rate is high, due to deformation.

Moreover, the existing nuclear fuel transport containers are usually used for transporting for a single nuclear fuel assembly and the efficiency of transportation and on-site loading and unloading is low.

### SUMMARY OF THE INVENTION

In view of the above problems, the present invention provides a nuclear fuel transport container, which can protect a nuclear fuel assembly from damage caused by vibration and impact during normal transport and operation, and has the advantages of simple assembly and high transport efficiency.

The nuclear fuel transport container of the present invention comprises an inner housing in which a first accommodation space for accommodating a nuclear fuel assembly is provided; an outer housing in which a second accommodation space for accommodating at least one inner housing is provided; an inner-outer housing coupling device for connecting the inner housing and the outer housing; wherein an inner side of the inner housing is provided with a neutron absorption plate, the outer housing has a double-layer structure composed of an outer shell facing the atmosphere and an inner shell facing the inner housing, the inner shell and the outer shell form a closed space in which buffer and thermal insulation materials are filled, and a neutron moderation plate is provided between the inner shell and the inner housing.

Preferably, the outer housing comprises an upper housing and a lower housing, and the upper housing and the lower housing form the second accommodation space after being assembled.

Preferably, the inner housing comprises a main body folded plate, a side plate and a top plate, wherein the side plate is hinged with the main body folded plate and the top plate respectively, and a locking device is provided between the top plate and the main body folded plate. After the top plate and the main body folded plate are locked, the main body folded plate, the side plate and the top plate form a first accommodation space.

Preferably, both ends of the inner housing along its length direction are respectively provided with a first end cover and a second end cover, the side plate includes a first side plate and a second side plate, the top plate includes a first top plate and a second top plate, the first end cover is fixedly connected with the main body folded plate, and the second end cover is fixedly connected with the second side plate and the second top plate.

Preferably, the second end cover is provided with a positioning stay rod which positions the nuclear fuel assembly.

Preferably, the outer housing is provided with a plurality of exhaust holes.

Preferably, a neutron moderation plate is provided between adjacent inner housings.

Preferably, an outer side of the neutron moderation plate is covered with a heat insulating plate.

Preferably, an isolation layer is provided between the neutron absorption plate and the nuclear fuel assembly.

Preferably, at least one reinforcing part is provided on the outer shell of the upper housing facing the atmosphere.

Preferably, at least one lifting-point position is provided on the outer shell of the upper housing facing the atmosphere.

Preferably, a support part is provided on the outer shell of the lower housing facing the atmosphere.

Preferably, an operating position for transportation device is provided on the outer shell of the lower housing facing the atmosphere.

The nuclear fuel transport container of the present invention adopts a housing structure composed of an outer housing and an inner housing, buffer and thermal insulation materials filled in the outer housing, a neutron moderation plate provided between the inner shell and the inner housing, in order to ensure the safety of the nuclear fuel assembly when it is subjected to vibration and impact, and keep the nuclear fuel assembly in a subcritical state. In addition, multiple inner housings can be accommodated in one outer housing, and the transportation of multiple nuclear fuel assemblies can be accomplished only by assembling and disassembling the outer housing once, thus improving the transportation efficiency.

### BRIEF DESCRIPTION TO THE DRAWING

Preferred embodiments of the present invention will be described below with reference to the accompanying drawings, which are for the purpose of explaining preferred embodiments of the present invention and not for the purpose of limiting the present invention. In figures,
Fig. 1 is an exploded schematic diagram of a nuclear fuel transport container according to an embodiment of the present invention;
Fig. 2 is a schematic cross sectional diagram of a nuclear fuel transport container according to an embodiment of the present invention;
Fig. 3 is an overall schematic diagram of an outer housing according to an embodiment of the present invention after assembly;
Fig. 4 is a schematic diagram of the overall structure of the inner housing according to an embodiment of the present invention;
Fig. 5 is a schematic diagram of the inner housing in Fig. 4 in an open state.

### Reference number

100: nuclear fuel transport container;
1: inner housing;
11: first accommodation space;
12: neutron absorption plate;
13: main body folded plate;
14: side plate;
141: first side plate;
142: second side plate;
143: connecting plate;
15: top plate;
151: first top plate;
152: second top plate;
16: hinge;
17: locking device;
18: first end cover;
19: second end cover;
191: positioning stay rod;
2: outer housing;
21: second accommodation space;
22: outer shell;
221: first outer shell;
222: second outer shell;
223: exhaust hole;
23: inner shell;
231: first inner shell;
232: second inner shell;
24: buffer and thermal insulation material;
25: upper housing;
251: first connecting plate;
252: reinforcing part;
253: lifting-point position;
26: lower housing;
261: second connecting plate;
262: support part;
263: operating position for transportation device;
27: bolt hole;
28: cushioning and vibration-absorbing device;
3: inner-outer housing coupling device;
4: neutron moderation plate.

### MODE OF CARRYING OUT THE INVENTION

Preferred embodiments of the assembled device of the present invention will be described in detail below with reference to the drawings. In the drawings, the same reference numbers are used for the same constituent elements, and repeated description is omitted.

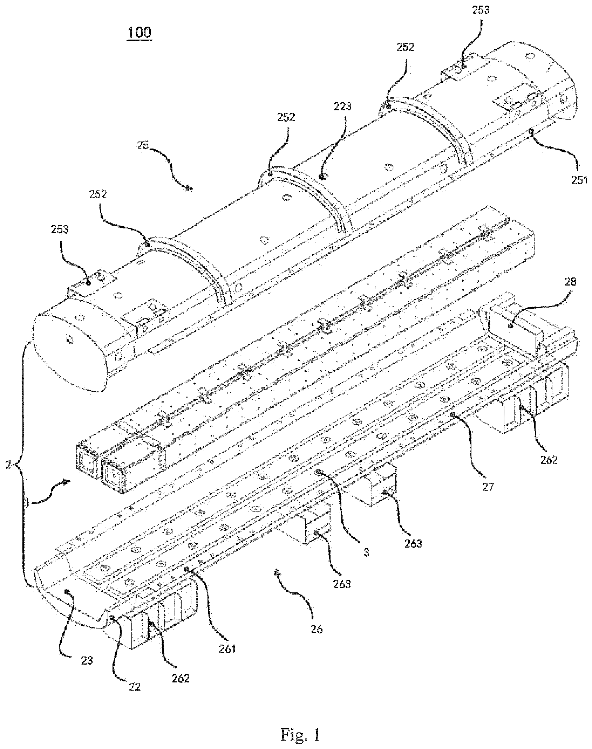

Fig. 1 is an exploded schematic diagram of a nuclear fuel transport container 100 according to an embodiment of the present invention.

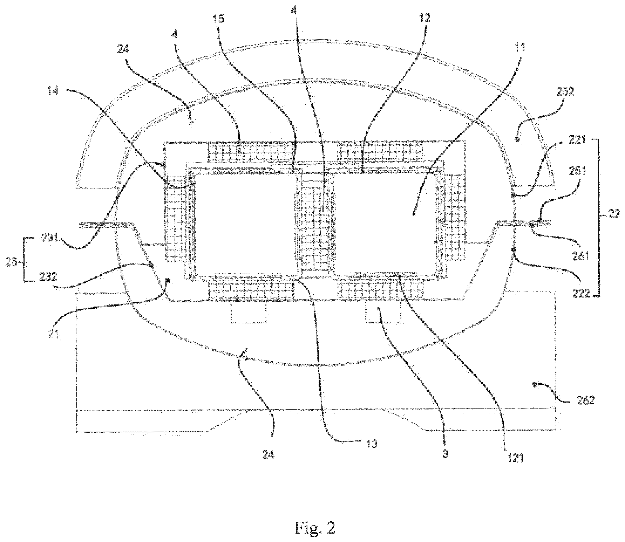

As shown in Fig. 1, the fuel transport container 100 of the present invention comprises an inner housing 1 and an outer housing 2. The inner housing 1 is provided with a first accommodation space 11 for accommodating a nuclear fuel assembly, and the outer housing 2 is provided with a second accommodation space 21 (see Fig. 2) for accommodating at least one inner housing 1.

In this embodiment, two inner housings 1 can be accommodated in the second accommodation space 21, and the two inner housings 1 are arranged side by side in the outer housing 2. The number of inner housings 1 that can be accommodated may also be set according to actual use needs. Multiple inner housings 1 can be accommodated in one outer housing 2. For example, there are two inner housings 1 in the present embodiment and the transportation of two nuclear fuel assemblies can be accomplished only by assembling and disassembling the outer housing 2 once, thus improving the operation efficiency.

The inner housing 1 and the outer housing 2 are connected and fixed by the inner-outer housing coupling device 3 which can be fixed on the outer housing 2. In an specific embodiment, the inner housing 1 is fixedly mounted on the outer housing 2 through the inner-outer housing coupling device 3.

Fig. 2 is a schematic cross sectional diagram of a nuclear fuel transport container 100 according to an embodiment of the present invention.

As shown in Fig. 2, the outer housing 2 has a double-layer structure, which comprises an outer shell 22 facing the atmosphere and an inner shell 23 facing the inner housing 1. The outer shell 22 and the inner shell 23 form a closed space which is filled with buffer and thermal insulation materials 24. The outer housing 2 can be made of 06Cr19Ni10 stainless steel which has high strength and corrosion resistance. Polyurethane foam material can be used as the buffer and thermal insulation material 24, which can absorb vibration and heat under extreme conditions such as accidental drop of the container and fire accident, and protect of the nuclear fuel assembly.

A neutron moderation plate 4 is arranged between the inner shell 23 and the inner housing 1, and a neutron absorption plate 12 is arranged on an inner side of the inner housing 1. The inner side of the inner housing refers to a side of the inner housing facing the nuclear fuel assembly. The inner housing 1 may be made of 6000 series aluminum alloy. The neutron absorption plate 12 has a neutron absorbing material and may be made of boron aluminum alloy. The neutron moderation plate 4 has a neutron moderating material and is a plate made of an ultra-high molecular weight polyethylene. The hydrogen atoms in the neutron moderation plate 4 slow down the neutrons and then the neutrons are absorbed by the neutron absorption plate 12. The neutrons are slowed down by the neutron moderation plate 4, and then absorbed by the neutron absorption plate 12, so that the nuclear fuel transport container 100 maintains the nuclear fuel assembly in a subcritical state under normal and accident transport conditions, thus ensuring safe transport.

In a specific embodiment, the outer housing 2 comprises an upper housing 25 and a lower housing 26, and the upper housing 25 and the lower housing 26 form a second accommodation space 21 after being assembled.

The upper housing 25 comprises a first outer shell 221 facing the atmosphere and a first inner shell 231 facing the inner housing 1. The lower housing 26 comprises a second outer shell 222 facing the atmosphere and a second inner shell 232 facing the inner housing 1. The first outer shell 221 and the first inner shell 231 form a first closed space, the second outer shell 222 and the second inner shell 232 form a second closed space, and the first closed space and the second closed space are respectively filled with buffer and thermal insulation materials 24. The buffer and thermal insulation materials 24 filled in the first closed space and the second closed space can be two kinds of polyurethane foam with different density which can absorb external vibration and can gasify and absorb heat at high temperature to improve the shock absorption and heat resistance of the container.

The outer housing 2 is divided into the upper housing 25 and the lower housing 26, the inner-outer housing coupling device 3 is fixedly provided on the lower housing 26, and the inner housing 1 is fixedly installed on the lower housing 26 through the inner-outer housing coupling device 3. In this embodiment, the lower housing 26 is provided with installation sites for two inner housings 2, so that two inner housings 2 in which the nuclear fuel assemblies can be respectively placed can be accommodated, thus realizing the requirement that one outer housing 2 accommodates two nuclear fuel assemblies. In addition, since the outer housing 2 is divided into the upper housing and the lower housing, after the nuclear fuel assembly is placed in the inner housing 2, the assembly of the outer housing 2 can be accomplished by simply assembling the upper housing 25 to the lower housing 26, which makes the disassembly and assembly operation of the nuclear fuel transport container 100 simple and improves the operation efficiency.

Further, in order to facilitate the disassembly and assembly of the upper housing 25 and the lower housing 26, a first connecting plate 251 is provided on the upper housing 25, and a second connecting plate 261 is provided on the lower housing 26. The first connecting plate 251 and the second connecting plate 261 respectively extend outward from the corresponding positions where the upper housing 25 and the lower housing 26 are assembled. The first connecting plate 251 and the second connecting plate 261 are respectively provided with a plurality of corresponding bolt holes 27 (see Fig. 1) and are fixedly connected by bolts, thereby realizing the fixed connection of the upper housing 25 and the lower housing 26.

Further, a sealing member, such as a rubber gasket, may be provided between the first connecting plate 251 and the second connecting plate 261 to achieve good sealing performance of the outer housing 2 and prevent water and other impurities from entering the inner housing 1.

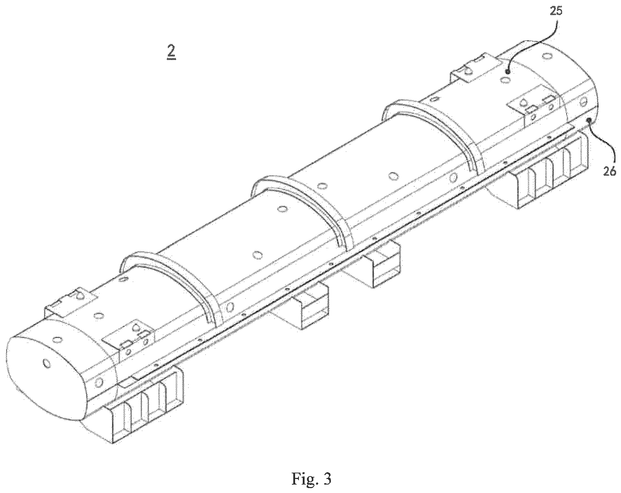

Fig. 3 is an overall schematic diagram of an outer housing 2 according to an embodiment of the present invention after assembly.

As shown in Fig. 3, after the upper housing 25 and the lower housing 26 are assembled, the upper housing 25 and the lower housing 26 are connected and fixed by bolts to form a sealed nuclear fuel transport container 100.

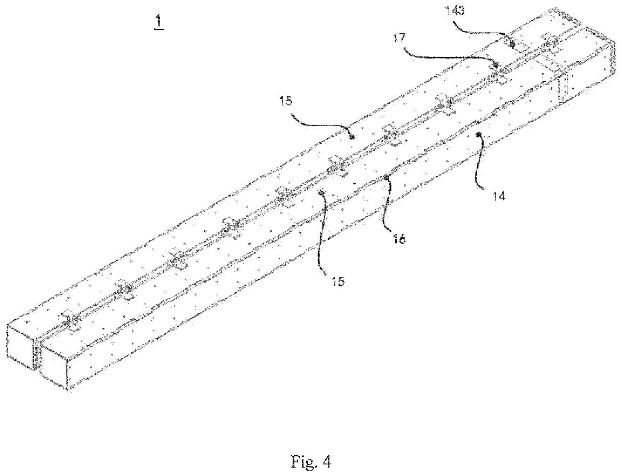

Fig. 4 is a schematic diagram of the overall structure of the inner housing 1 according to an embodiment of the present invention.

Fig. 4 shows two inner housings 1 which are symmetrically arranged and can be opened to two sides.

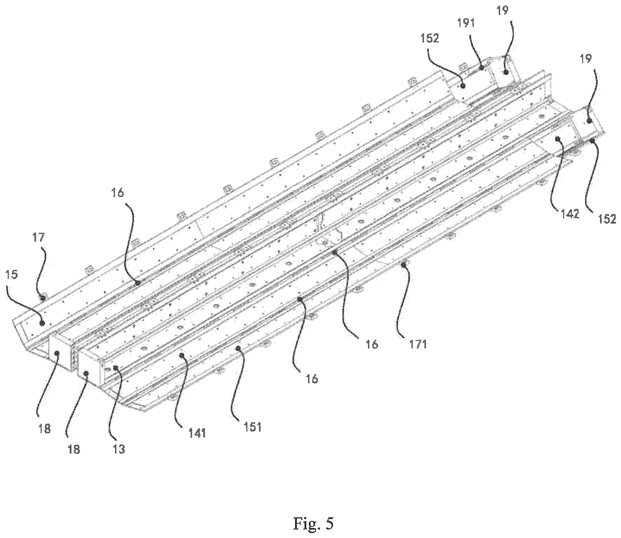

Fig. 5 is a schematic diagram of the inner housing 1 in Fig. 4 in an open state.

As shown in Fig. 5, the inner housing 1 comprises a main body folded plate 13, a side plate 14 and a top plate 15, wherein the side plate 14 is connected by a hinge 16 with the main body folded plate 13 and the top plate 15 respectively, and a locking device 17 is provided between the top plate 15 and the main body folded plate 13. After the top plate 15 and the main body folded plate 13 are locked, the main body folded plate 13, the side plate 14 and the top plate 15 form a first accommodation space 11. The locking device 17 can lock and fix the top plate 15 and the main body folded plate 13 by means of a buckle, a bolt connection or the like.

Both ends of the inner housing 1 along its length direction are respectively provided with a first end cover 18 and a second end cover 19, the side plate 14 includes a first side plate 141 and a second side plate 142, the top plate 15 includes a first top plate 151 and a second top plate 152, the first end cover 18 is fixedly connected with the main body folded plate 13, and the second end cover 19 is fixedly connected with the second side plate 142 and the second top plate 152.

The second side plate 142 and the second top plate 152 may be fixedly connected with the second end cover 19 by bolts. The second top plate 152 and the main body folded plate 13 are locked by the locking device 17. When it is required to inspect the inside of the inner housing 1, the locking device 17 between the second top plate 152 and the main body folded plate 13 may be opened, and the second top plate 152, together with the second end cover 19 and the second side plate 142 are flipped over. Thus, the nuclear fuel assembly in the inner housing 1 can be inspected to prevent the nuclear fuel assembly from tipping over and other situation, which makes the container easy to maintain and operate. The lengths of the second side plate 142 and the second top plate 152 are set to facilitate observation and operation.

During use, the nuclear fuel assembly is installed in the inner housing 1, and the top plate 15 is locked with the corresponding locking device 17 on the main body folded plate 13. The first side plate 141 and the second side plate 142, as well as the first top plate 151 and the second top plate 152 can be fixedly connected by a connecting plate 143 (see Fig. 4), respectively, thereby strengthening the fastening stability of the inner housing 1.

Furthermore, the second end cover 19 is provided with a positioning stay rod 191 for positioning the nuclear fuel assembly, thereby making the nuclear fuel assemblies more stable and preventing them from tipping over.

An accelerometer (not shown in the figures) can be provided at the end of the inner housing 1, which monitors the peak acceleration of the nuclear fuel assembly during loading, unloading and transportation to avoid danger.

As shown in Fig. 2, a neutron moderation plate 4 is also provided between adjacent inner housings 1, which is made of an ultra-high molecular weight polyethylene. The hydrogen atoms in the neutron moderating plate 4 slow down the neutrons and then the neutrons are absorbed by the neutron absorption plate 12. The neutrons are slowed down by the neutron moderation plate 4, and then absorbed by the neutron absorption plate 12, so that the nuclear fuel transport container 100 maintains the nuclear fuel assembly in a subcritical state under normal and accident transport conditions, thus ensuring safe transport.

In case of an accident during transportation, in order to prevent the neutron moderation plate 4 from being damaged after an accident fire, an outer side of the neutron moderation plate 4 can be covered with a thermal insulation plate (not shown) which can be made of ceramic fiber plate. After the neutron moderation plate 4 is covered in this way, the heat of the fire can be isolated, so as to protect the neutron moderation plate 4.

A neutron absorber plate 12 is provided inside the inner housing 1. Neutron absorber plates 12 can be provided on the main body folded plate 13, side plates 14 and top plate 15 of the inner housing 1. An isolation layer 121 (see Fig. 2) can also be provided between the neutron absorption plate 12 and the nuclear fuel assembly. The isolation layer 121 can be made of cork rubber plate. The isolation layer 121 can prevent the nuclear fuel assembly from being scratched during assembly, disassembly and transportation, and ensure the safe sealing of the nuclear fuel assembly.

A plurality of rubber compression blocks (not shown) may also be provided in other positions of the inner housing 1 in contact with the nuclear fuel assembly, thereby ensuring that the nuclear fuel assembly is securely placed inside the inner housing 1. Similarly, in order to ensure that the inner housing 1 is securely placed inside the outer housing 2, a cushioning and vibration-absorbing device 28 can be provided at the ends along the length direction of the inner housing 1 in the outer housing 2, which can absorb external vibration and ensure the stability of the inner housing when vibration and shaking occurs during transportation.

As shown in Figs. 1 and 3, the outer shell 22 is provided with a plurality of exhaust holes 223. In the event of an accident during transportation, the polyurethane foam material used in the buffer and thermal insulation materials 24 filled in the outer housing 2 will be heated to produce gases, and the exhaust holes 223 can discharge the gases to reduce the pressure inside the outer housing 2 and ensure the safety of the housing.

In order to strengthen the structural strength of the upper housing 25 and to avoid damage to the housing in case of impact, at least one reinforcing part 252 can be provided on the outer shell 221 of the upper housing 25 facing the atmosphere. In Fig. 1, the reinforcing part 252 is welded to the outside of the upper housing 25, and three reinforcing parts 252 are arranged in parallel on the upper housing 25. The number of the reinforcing parts can be set according to the actual length of the outer housing 2 in order to ensure the strength.

Nuclear fuel assemblies are usually large in size and heavy in weight. In order to facilitate installation, at least one lifting-point position 253 is provided on the outer shell 221 of the upper housing 25 facing the atmosphere to facilitate lifting of the upper housing 25 by lifting equipment.

As shown in Figs. 1 and 3, support parts 262 are provided on the outer shell 222 of the lower housing 26 facing the atmosphere. A plurality of support parts 262 may be provided. In this embodiment, two support parts 262 are provided, which are arranged in parallel along the length direction of the lower housing 26, and used to bear the overall weight of the nuclear fuel transport container 100 and the nuclear fuel assembly.

In addition, in order to facilitate the transfer transport of the nuclear fuel transport container 100, an operating position 263 for transportation device may be provided on the outer shell 222 of the lower housing 26 facing the atmosphere. In this embodiment, a forklift is used for the container transfer, and the operating position 263 for transportation device is a forklift position. The front fork of the forklift is inserted into the forklift position to realize the transfer transport operation of the nuclear fuel transport container 100.

The nuclear fuel transport container 100 of the present invention can be loaded, transported and disassembled according to the following steps during use.

When the nuclear fuel assembly is loaded, the following steps are included:
Step 1, the front fork of the forklift is firstly inserted into the operating position 263 for transportation device, and the nuclear fuel transport container 100 is transferred to the loading position.
Step 2, the bolts for connecting the first connecting plate 251 of the upper housing 25 and the second connecting plate 261 of the lower housing 26 are removed. The lifting equipment is connected to the lifting-point position 253 of the upper housing 25 to lift the upper housing 25 as a whole.
Step 3, the inner housing 1 fixed on the lower housing 26 and the lower housing 26 are turned over to the vertical position as a whole.
Step 4, the locking device 17 for connecting the top plate 15 and the main body folded plate 13 is opened to make the inner housing 1 in an open state.
Step 5, the nuclear fuel assembly is lifted into the inner housing 1; after the position is adjusted, a plurality of rubber compression blocks are provided at other parts of the inner housing 1 that are in contact with the nuclear fuel assembly.
Step 6, the top plate 15 together with the side plate 14 are lifted, the position of the positioning stay rod 191 and the nuclear fuel assembly are adjusted, and the top plate 15 is fixed with the main body folded plate 13 through the locking device 17.
Step 7, the inner housing 1 fixed on the lower housing 26 and the lower housing 26 are turned over to a horizontal position.
Step 8, the upper housing 25 is lifted onto the lower housing 26 by the lifting equipment, the connecting bolts for connecting the first connecting plate 251 of the upper housing 25 and the second connecting plate 261 of the lower housing 26 are installed, and the container is installed with a lead seal.

With the above steps, the loading of nuclear fuel assemblies into the nuclear fuel transport container 100 can be accomplished. Once the loading is completed, the fuel transport container 100 can be lifted into a cargo container for transport, bundled using the prescribed method, and transported to a nuclear power plant using a fuel transport vehicle with air shock absorption means.

Upon arrival at the nuclear power plant, the fuel transport container 100 can be opened and the nuclear fuel assemblies can be got out according to the steps for loading nuclear fuel assemblies.

The nuclear fuel transport container of the present invention adopts a housing structure composed of an outer housing 2 and an inner housing 1, buffer and thermal insulation materials 24 filled in the outer housing 2, a neutron moderation plate provided between the inner shell 23 and the inner housing 1, in order to ensure the safety of the nuclear fuel assembly when it is subjected to vibration and impact, and keep the nuclear fuel assembly in a subcritical state. In addition, multiple inner housings 1 can be accommodated in one outer housing 2, and the transportation of multiple nuclear fuel assemblies can be accomplished only by assembling and disassembling the outer housing 2 once, thus improving the transportation efficiency.

The above mentioned is only preferred embodiments of the present invention and is not intended to limit the present invention. Any modification, equivalent replacement, improvement, etc. made within the spirit and principles of the present invention shall be included in the scope of protection of the present invention.

## Claims

1. A nuclear fuel transport container, wherein, the container comprises:
an inner housing in which a first accommodation space for accommodating a nuclear fuel assembly is provided;
an outer housing in which a second accommodation space for accommodating at least one inner housing is provided;
an inner-outer housing coupling device for connecting the inner housing and the outer housing;
wherein,
an inner side of the inner housing is provided with a neutron absorption plate,
the outer housing has a double-layer structure composed of an outer shell facing atmosphere and an inner shell facing the inner housing, the inner shell and the outer shell form a closed space in which buffer and thermal insulation materials are filled, and
a neutron moderation plate is provided between the inner shell and the inner housing.

2. The nuclear fuel transport container according to claim 1, wherein,
the outer housing comprises an upper housing and a lower housing, and the upper housing and the lower housing form the second accommodation space after being assembled.

3. The nuclear fuel transport container according to claim 1, wherein,
the inner housing comprises a main body folded plate, a side plate and a top plate, wherein the side plate is hinged with the main body folded plate and the top plate respectively, and a locking device is provided between the top plate and the main body folded plate; after the top plate and the main body folded plate are locked, the main body folded plate, the side plate and the top plate form the first accommodation space.

4. The nuclear fuel transport container according to claim 3, wherein,
both ends of the inner housing along its length direction are respectively provided with a first end cover and a second end cover,
the side plate comprises a first side plate and a second side plate, the top plate comprises a first top plate and a second top plate,
the first end cover is fixedly connected with the main body folded plate, and the second end cover is fixedly connected with the second side plate and the second top plate.

5. The nuclear fuel transport container according to claim 4, wherein,
the second end cover is provided with a positioning stay rod for positioning the nuclear fuel assembly.

6. The nuclear fuel transport container according to claim 1, wherein, the outer housing is provided with a plurality of exhaust holes.

7. The nuclear fuel transport container according to claim 1, wherein,
a neutron moderation plate is provided between adjacent said inner housings.

8. The nuclear fuel transport container according to claim 7, wherein,
an outer side of the neutron moderation plate is covered with a heat insulating plate.

9. The nuclear fuel transport container according to claim 1, wherein,
an isolation layer is provided between the neutron absorption plate and the nuclear fuel assembly.

10. The nuclear fuel transport container according to claim 2, wherein,
at least one reinforcing part is provided on the outer shell of the upper housing facing atmosphere.

11. The nuclear fuel transport container according to claim 2, wherein,
at least one lifting-point position is provided on the outer shell of the upper housing facing atmosphere.

12. The nuclear fuel transport container according to claim 2, wherein,
a support part is provided on the outer shell of the lower housing facing atmosphere.

13. The nuclear fuel transport container according to claim 2, wherein,
an operating position for transportation device is provided on the outer shell of the lower housing facing atmosphere.
